# EUROPEAN PATENT SPECIFICATION

(11) **EP 3 690 282 B1**
(45) Date of publication and mention of the grant of the patent: **15.09.2021**
(21) Application number: 20152813.0
(22) Date of filing: 21.01.2020
(51) Int. Cl.: F16H 3/00, F16H 37/04

(54) **A TRANSMISSION ASSEMBLY**
GETRIEBEANORDNUNG
ENSEMBLE DE TRANSMISSION

(30) Priority: 31.01.2019 IT 201900001389
(43) Date of publication of application: 05.08.2020
(73) Proprietor: Roccatello, Umberto, 73048 Nardo' (LE) (IT)
(72) Inventor: ROCCATELLO, Umberto, 73048 NARDO' (LE) (IT)
(74) Representative: Corradini, Corrado

(56) References cited:
- EP-A1- 3 388 714
- DE-A1- 10 239 540
- GB-A- 1 488 233

## Description

### TECHNICAL FIELD

The present invention relates to a transmission assembly. More specifically, the present invention relates to a powershift transmission assembly, that is, capable of allowing the selection of at least a part of the transmission ratios made available by the transmission assembly itself, under conditions of torque transmitted by an input shaft to an output shaft of the transmission assembly.

### PRIOR ART

In the field of agricultural or earth-moving vehicles, it is known the use of transmission assemblies for modulating the forward speed of the vehicle itself, for example comprising, or substantially configured as, discontinuous speed gears.

A discontinuous speed gear generally comprises at least a pair of gears, which connect two shafts that are mechanically and independently from each other between which motion must be transmitted, and a selection device capable of selecting the motion transmission between said shafts by means of one or the other gear.

A type of these transmission assemblies, commonly known as "powershift" transmission assemblies, are configured in motion such as to allow the engagement of one or more gears even under conditions of torque transmitted by the vehicle motor to the wheels, i.e. from a shaft input to an output shaft of the transmission assembly. According to the invention, a transmission assembly called "powershift" comprises:
- an input shaft adapted to be connected to a motor of the vehicle,
- an output shaft adapted to be connected to a driving wheel of the vehicle,
- a first transmission apparatus which mechanically connects the input shaft to a first driving shaft,
- a first friction clutch interposed between the first driving shaft and a first driven shaft, 11
- a first discontinuous speed gear, which connects the first driven shaft to an intermediate shaft and is provided with:
   o a first gear, which comprises a first toothed wheel associated with the first driven shaft and a second toothed wheel rotatably idly associated with the intermediate shaft which meshes with said first toothed wheel,
   o a second gear, which comprises a first toothed wheel associated with the first driven shaft and a second toothed wheel associated with the intermediate shaft, and
   o a selector device configured to select the first gear or the second gear of the first discontinuous speed gear, for motion transmission between the first driven shaft and the intermediate shaft, which is configured to selectively make either the first toothed wheel of the first gear or the second toothed wheel of the second gear rotatingly integral with the first driven shaft
- a second transmission apparatus which mechanically connects the input shaft to a second driving shaft,
- a second friction clutch interposed between the second driving shaft and a second driven shaft,
- a second discontinuous speed gear connecting the second driven shaft to the intermediate shaft and provided with:
   o a first gear comprising a first toothed wheel associated with the second driven shaft and a second toothed wheel rotatably idly associated with the intermediate shaft and rotatingly integral with the second toothed wheel of the first gear of the first discontinuous speed gear,
   o a second gear comprising a first toothed wheel associated with the second driven shaft and a second toothed wheel associated with the intermediate shaft, and
   o another selector device configured to select the first gear or the second gear of the second discontinuous speed gear for motion transmission between the second driven shaft and the intermediate shaft, which is configured to selectively make either the first toothed wheel of the first gear or the second toothed wheel of the second gear rotatingly integral with the second driven shaft
- a gear reducer provided with a first toothed wheel rotatingly integral with the intermediate shaft and a second toothed wheel rotatably idly associated with the output shaft and which meshes with the first toothed wheel,
- a multiplier gear provided with a first toothed wheel, rotatably associated with the intermediate shaft and rotatingly integral with the second toothed wheel of the first gear of the first discontinuous speed gear, and a second toothed wheel rotatably idly associated with the output shaft and which meshes with the first toothed wheel of the multiplier gear,
- a first connecting device associated with the second toothed wheel of the first gear of the first discontinuous speed gear and operable between a first position, in which it makes the intermediate shaft rotatingly integral with said second toothed wheel, and a second position, in which it allows a relative rotation between the second toothed wheel and the intermediate shaft,
- a second connecting device associated to the gear reducer and operable between a first position, in which it makes the second toothed wheel of the gear reducer rotatingly integral with the output shaft, and a second position, in which it allows a relative rotation between said second toothed wheel and the output shaft,
- a third connecting device associated to the multiplier gear and operable between a first position, in which it makes the second toothed wheel of the multiplier gear rotatingly integral with the output shaft, and a second position, in which it allows a relative rotation between said second toothed wheel and the output shaft.

Current powershift transmission assemblies are increasingly required to:
- make available a quite high ratio between the forward speed in the highest gear and the forward speed in the lowest gear, for example greater than 7, preferably between 15 and 20, to allow high forward speeds even during processing on the field and even greater ratios in the case of road transport,
- maintain, despite said ratio, reduced speed jumps between one gear and another, for example lower than a ratio of 1.2 between two successive gears, therefore having to employ a fairly high number of gears (i.e. transmission ratios), i.e. generally more than 8-12 transmission ratios,

- maintain, despite the high number of gears, a limited axial size, i.e. a limited size in the direction of the input or output axles of the transmission assembly itself, therefore a limited number of gears and gear selection devices in each discontinuous speed gear,
- allow the shift across all transmission ratios in conditions under load, i.e. without interrupting the transmission of torque from the motor to the drive wheels.

When these conditions must be all met at the same time, the current "powershift" transmission assemblies, such as the one described above, are not able to allow the shift across all transmission ratios under load, but there is an operating condition in which the input shaft must be isolated from the output shaft to allow the implementation of some selection devices, for example synchronizers, in order to engage the toothed wheels necessary for the desired transmission ratio.

Another example of transmission assembly for agricultural vehicles can be found on EP3388714 A1.

An object of the present invention is therefore that of making available a "powershift" transmission assembly with limited axial size, with a ratio between the forward speed in the highest gear and the forward speed in the lowest gear greater than 7, with a high number of ratios, and in which all the speed ratios of the transmission assembly can be achieved under load.

Such purposes are accomplished by the characteristics of the invention given in the independent claim. The dependent claims outline preferred and/or particularly advantageous aspects of the invention.

### DESCRIPTION OF THE INVENTION

The invention makes available a transmission assembly for motor vehicles, comprising:
- an input shaft adapted to be connected to a motor of the vehicle,
- an output shaft adapted to be connected to a drive wheel of the vehicle,
- a first transmission apparatus which mechanically connects the input shaft to a first driving shaft,
- a first friction clutch interposed between the first driving shaft and a first driven shaft
- a first discontinuous speed gear, which connects the first driven shaft to an intermediate shaft and is provided with:
   ∘ a first gear, which comprises a first toothed wheel associated with the first driven shaft and a second toothed wheel rotatably associated with the intermediate shaft,
   ∘ a second gear, which comprises a first toothed wheel associated with the first driven shaft and a second toothed wheel associated with the intermediate shaft, and
   ∘ a selector device configured to select the first gear or the second gear of the first discontinuous speed gear, for motion transmission,
- a second transmission apparatus which mechanically connects the input shaft to a second driving shaft,
- a second friction clutch interposed between the second driving shaft and a second driven shaft,
- a second discontinuous speed gear connecting the second driven shaft to the intermediate shaft and is provided with:
   ∘ a first gear comprising a first toothed wheel associated with the second driven shaft and a second toothed wheel rotatably associated with the intermediate shaft and integral with the second toothed wheel of the first gear of the first speed gear,
   ∘ a second gear comprising a first toothed wheel associated with the second driven shaft and a second toothed wheel associated with the intermediate shaft, and
   ∘ a selector device configured to select the first gear or the second gear of the second discontinuous speed gear for motion transmission,
- a gear reducer provided with a first toothed wheel rotatingly integral with the intermediate shaft and a second toothed wheel rotatably associated with the output shaft,
- a multiplier gear provided with a first toothed wheel, rotatably associated with the intermediate shaft and rotatingly integral with the second toothed wheel of the first gear of the first discontinuous speed gear, and a second toothed wheel rotatably associated with the output shaft,
- a first connecting device associated with the second toothed wheel of the first gear of the first speed gear and operable between a first position, in which it makes the intermediate shaft rotatingly integral with said second toothed wheel, and a second position, in which it allows a relative rotation between the second toothed wheel and the intermediate shaft,
- a second connecting device associated to the gear reducer and operable between a first position, in which it makes the second toothed wheel of the gear reducer rotatingly integral with the output shaft, and a second position, in which it allows a relative rotation between said second toothed wheel and the output shaft
- a third connecting device associated to the multiplier gear and operable between a first position, in which it makes the second toothed wheel of the multiplier gear rotatingly integral with the output shaft, and a second position, in which it allows a relative rotation between said second toothed wheel and the output shaft.

Thanks to this solution, the transmission assembly has a limited axial size, a ratio between the forward speed in the highest gear and the forward speed in the lowest gear greater than 7, a high number of ratios, and above all it allows achieving all the transmission ratios made available by the transmission assembly under load. Furthermore, the solution has a reduced number of friction clutches, which guarantees limited power losses in the motion transmission from the input shaft to the output shaft (since the friction clutches, being in an oil bath, represent a detrimental factor which is significant when calculating the efficiency of the transmission assembly). Furthermore, the possibility of disengaging the second toothed wheel of the first gear of the first discontinuous speed gear, and therefore interrupting the motion transmission between it and the intermediate shaft, allows, since there are fewer engaged transmission elements, decreasing the losses of load and noise of the transmission assembly. In particular, this occurs because, when the first connecting device decouples said second toothed wheel from the intermediate shaft and the torque is transmitted via the second gear of the first speed gear or the second gear of the second speed gear, the gear of the speed gear through which the torque is not transmitted at that moment, is not put in rotation by the intermediate shaft, thus ideally being able to stop.

One aspect of the invention provides that the pitch diameter of the second toothed wheel of the first gear of the first speed gear can be equal to the pitch diameter of the first toothed wheel of the multiplier gear.

In this way the second toothed wheel of the first gear and the first toothed wheel of the multiplier gear can be made in a single toothed wheel which meshes with the first toothed wheel of the first gear of the first speed gear and with the second toothed wheel of the multiplier gear, thus reducing the weight of the transmission assembly and the axial size of the transmission assembly.

Another aspect of the invention provides that the gear can comprise:
- a third transmission apparatus which mechanically connects the input shaft to a third driving shaft,
- a third friction clutch interposed between the third driving shaft and a third driven shaft,
- a third discontinuous speed gear connecting the third driven shaft to the intermediate shaft and is provided with:
   ∘ a first gear, which comprises a first toothed wheel associated with the third driven shaft and a second toothed wheel rotatably associated with the intermediate shaft and integral with the second toothed wheel 57 of the first gear of the first speed gear,
   ∘ a second gear comprising a first toothed wheel associated with the third driven shaft and a second toothed wheel associated with the intermediate shaft, and
   ∘ a selector device configured to select the first gear or the second gear of the first discontinuous speed gear, for the motion transmission.

In this way, a transmission assembly is made available which in addition to the aforementioned advantages (limited axial size, ratio between the forward speed in the highest gear and the forward speed in the lowest gear, greater than 7, number of ratios, all the transmission ratios made available by the transmission assembly that can be engaged under load), allows a greater number of selectable speed ratios to be available with the same axial size. Furthermore, despite the addition of a friction clutch with respect to the solution described above, the overall number of friction clutches (i.e. three) remains limited, thus guaranteeing low pressure drops. Furthermore, this feature allows having a transmission assembly which makes available, at any time and ready for use even under load, in addition to an overall transmission ratio, selection, i.e. a selected gear, an overall transmission ratio greater than the one selected and an overall transmission ratio lower than the one selected (except of course for the highest and the lowest gear). Consequently, the transmission assembly does not require a complicated software to interpret the behaviour of the user of the vehicle as is the case for example in the twoclutch transmission assemblies, which can only have one gear selected and either a high gear or a low gear ready for use at the same time as the selected gear, the selection of which is carried out by means of a software that tries to predict the needs of the vehicle's user based on his behaviour and other vehicle parameters.

According to yet another aspect of the invention, the value of an overall transmission ratio between the output shaft and the input shaft when the torque is transmitted between said input shaft and said output shaft by means of the third transmission apparatus, the second gear of the third speed gear and the gear reducer is comprised between 0.95 and 1.05 times the value of the overall transmission ratio between the output shaft and the input shaft when the torque is transmitted between said input shaft and said output shaft by means of the first transmission apparatus, the first gear of the first speed gear and the multiplier gear.

Thanks to this solution, the first connecting device and the second connecting device can each comprise a coupling joint, each operable between a first position, in which they leave the respective toothed wheel with which they are associated free to rotate with respect to the output shaft, and a second position, in which it makes the respective toothed wheel rotatingly integral with the output shaft. The use of a coupling joint, for example compared to a synchronizer, has economic advantages, as well as greater reliability, thanks to the intrinsic sturdiness of the coupling joint, and an increase in the useful life, thanks to the absence of friction as is the case in the synchronizers. In particular, the use of coupling joints is possible because the speeds of the output shaft and the toothed wheels in the twelfth and the thirteenth gears are approximately equal thanks to this configuration. For example, the second toothed wheel of the first gear of the first speed gear can coincide with the second toothed wheel of the first gear of the second speed gear.

In this way the transmission assembly is more compact, in particular along the axial direction, and lighter than the known transmission assemblies.

Another aspect of the invention can contribute to the same advantage, according to which the second toothed wheel of the second gear of the first speed gear can coincide with the second toothed wheel of the second gear of the second speed gear.

The invention also makes available a motor vehicle equipped with a motor, a drive wheel and a transmission assembly according to claim 1, for the transmission and modulation of the motion from the motor to the drive wheel.

### BRIEF DESCRIPTION OF THE DRAWINGS

Further features and advantages of the invention will be more apparent after reading the following description provided by way of non-limiting example, with the aid of the accompanying drawings.
Figure 1 is a schematic representation of an embodiment of a transmission assembly according to the invention.
Figure 2 is a schematic representation of another embodiment of the transmission assembly according to the invention.
Figure 3 is a schematic representation of a motor vehicle equipped with the transmission assembly according to the invention.

### DETAILED DESCRIPTION

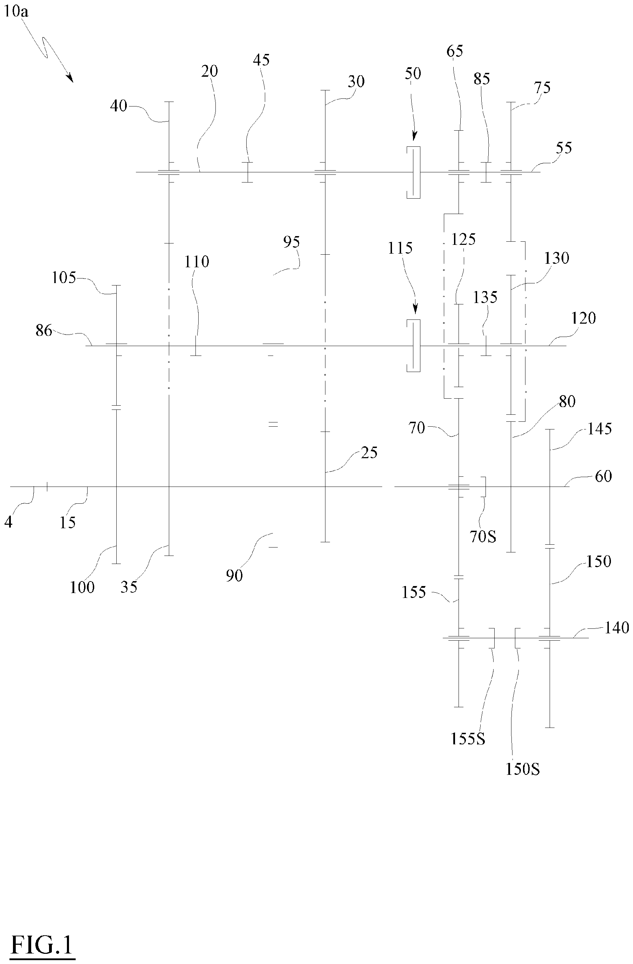

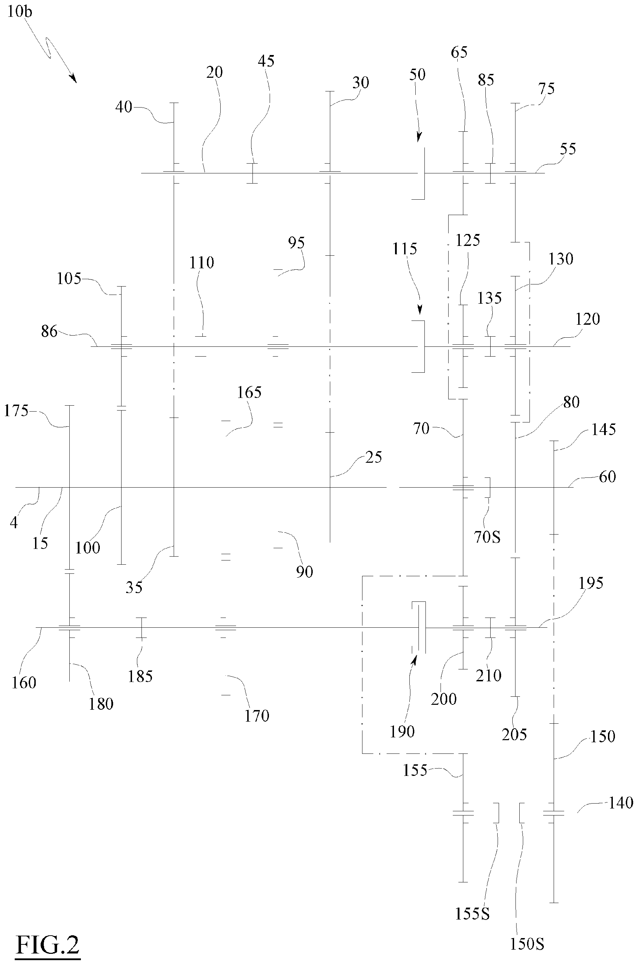

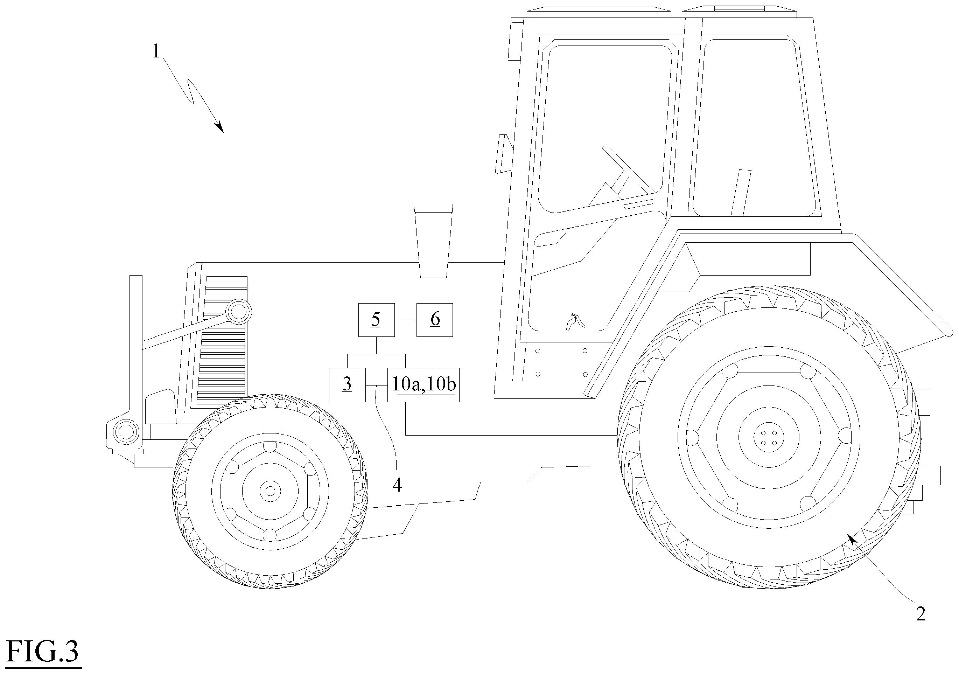

With particular reference to these figures, 10a, 10b generally indicate a transmission assembly, schematically illustrated in Figures 1 and 2, for a motor vehicle 1, schematically illustrated in Figure 3, for example an earth-moving vehicle or an agricultural vehicle, in particular an agricultural tractor.

The vehicle 1 can be equipped with a bearing frame and a pair of drive wheels 2 rotatably associated with said bearing frame. Furthermore, the vehicle comprises a motor 3, fixed to the bearing frame and equipped with an output shaft 4, which transmits a rotary motion to the transmission assembly 10a, 10b.

The vehicle 1 can be equipped with an activating system 5 for activating, for example assisted by an electronic control unit 6, the motor 3 and of the transmission assembly 10a, 10b.

The transmission assembly 10a, 10b is configured to transmit and modulate the motion from the output shaft 4 of the motor 3 to the drive wheels 2.

The transmission assembly 10a, 10b can comprise a protective casing (not shown in the drawings) fixed to the bearing frame of the vehicle 1. For example, this casing can be at least partially filled with a lubricating fluid.

The transmission assembly is equipped with an input shaft 15, preferably at least partially contained in the casing and rotatably associated therewith.

The input shaft 15 can have one end rigidly, preferably also directly, rotatingly connected to the output shaft 4 of the motor 3.

For example, the first end of the input shaft 15 has a grooved profile for the coupling to the output shaft 4 of the motor 3.

The transmission assembly 10a, 10b comprises a first driving shaft 20, for example parallel and eccentric to the input shaft 15, preferably contained in the casing and rotatably associated therewith.

The transmission assembly 10a, 10b is also equipped with a first transmission apparatus which mechanically connects, preferably also directly, the input shaft 15 to the first driving shaft 20.

The first transmission apparatus is configured so that the rotation speed of the first driving shaft 20 is different from the rotation speed of the input shaft 15.

That is, the first transmission apparatus introduces a transmission ratio different from the unit between the first driven shaft 10 and the input shaft 15.

It should be noted that in this discussion "transmission ratio" means the ratio between the rotation speed of a crankshaft and the rotation speed of a driven shaft which receives the motion made available by the crankshaft. In the specific case presented above it is the ratio between the rotation speed of the input shaft and the rotation speed of the first intermediate shaft.

The first transmission apparatus could comprise a gear, for example a single gear, which directly and mechanically connects the input shaft 15 to the first driving shaft 20.

In the illustrated embodiment, the first transmission apparatus comprises a discontinuous speed gear which connects the input shaft 15 to the first driving shaft 20 and is configured to make available at least two different selectable transmission ratios for the motion transmission between said shafts.

The discontinuous speed gear of the first transmission apparatus can comprise a group of gears selectively adapted to connect the first driving shaft 20 with the input shaft 15, i.e. it can comprise a first gear and a second gear, distinct from the first gear, each of which mechanically, and for example directly, connects the input shaft 15 to the first driving shaft 20.

Preferably, the first gear comprises a first toothed wheel 25 associated with the input shaft 15, preferably fitted to the input shaft, and a second toothed wheel 30 associated with the first driving shaft 20, preferably idly associated with said first driving shaft, and which meshes, for example directly, with said first toothed wheel 25.

The second gear can comprise a first toothed wheel 35 associated with the input shaft 15, preferably fitted to the input shaft, and a second toothed wheel 40 associated with the first driving shaft 20, preferably idly associated with said first driving shaft, and which meshes, for example directly, with said first toothed wheel 35.

For example, the second gear 35,40 is configured to achieve a lower transmission ratio than a transmission ratio that the first 25,30 gear is configured to achieve.

The speed gear of the first transmission apparatus also comprises a selector device configured to select the first gear 25,30 or the second gear 35,40 for the motion transmission between the input shaft 15 and the first driving shaft 20.

In practice, the selector device is configured to selectively make either the second toothed wheel 30 of the first gear or the second toothed wheel 40 of the second gear rotatingly integral with the first driving shaft 20.

It should be noted that "an element rotatingly integral with another element" means that said rotatingly integral elements rotate at the same time as the same rotation speed. In particular, that an element is directly dragged in rotation by another element, for example without there being degrees of freedom between one element and another. Or again that one element is fitted to the other.

The selector device comprises a synchronizer 45 axially interposed between the second toothed wheel 30 of the first gear and the second toothed wheel 40 of the second gear and operable between a first position, in which it brings the first driving shaft 20 to the speed of the second toothed wheel 30 of the first gear and subsequently it rigidly connects this second toothed wheel 30 to the first driving shaft 20, and a second position, in which it brings the first driving shaft 20 to the speed of the second toothed wheel 40 of the second gear and subsequently it rigidly connects this second toothed wheel 40 to the first driving shaft 20.

The synchronizer 45 of the selector device is preferably operable only between the first position and the second position.

However, it is not excluded that in an alternative embodiment, the synchronizer 45 may provide for an intermediate position between the first and the second position, in which both the second toothed wheels 30,40 of the first gear and of the second gear of the discontinuous speed gear of the first transmission apparatus are free to rotate idly with respect to the first driving shaft 20.

The transmission assembly 10a, 10b comprises a first friction clutch 50, for example of the multi-disc type in oil bath, which is, preferably directly, interposed between the first driving shaft 20 and a first driven shaft 55, which is preferably coaxial to the first driving shaft 20.

The first friction clutch 50 comprises a first portion rigidly rotatingly integral with the first driving shaft 20, a second portion rigidly rotatingly integral with the first driven shaft 55 and an activating mechanism (not shown in the figures) configured to selectively couple and decouple rotatingly the first portion and the second portion.

Said activating mechanism is operatively connected to the electronic control unit 6.

The transmission assembly comprises a first discontinuous speed gear which mechanically connects the first driven shaft 55 to an intermediate shaft 60, for example coaxial to the input shaft 15 and rotatably associated with the casing independently of the input shaft 15.

The first discontinuous speed gear is configured to make available at least two different selectable transmission ratios for the motion transmission between said shafts.

The first discontinuous speed gear can comprise a group of gears selectively adapted to connect the first driven shaft 55 with the intermediate shaft 60, i.e. it can comprise a first gear and a second gear, distinct from the first gear, each of which mechanically connects, and for example directly, the first driven shaft 55 to the intermediate shaft 60. Preferably, the first gear comprises a first toothed wheel 65 associated with the first driven shaft 55, preferably rotatably idly associated with said first driven shaft, and a second toothed wheel 70 associated with the intermediate shaft 60, preferably rotatably idly associated with the intermediate shaft, which meshes, for example directly, with said first toothed wheel 65.

The transmission assembly 10a, 10b comprises a first connecting device 70s associated with the second toothed wheel 70 of the first gear of the first speed gear (i.e. associated with the intermediate shaft 60) and operable between a first position, in which it makes the intermediate shaft rotatingly integral with said second toothed wheel 70, and a second position, in which it allows a relative rotation between the second toothed wheel 70 and the intermediate shaft, i.e. in this second position the second toothed wheel 70 is free to rotate idly with respect to the intermediate shaft 60.

In particular, the first connecting device 70s in the first position brings the intermediate shaft 60 to the speed of the second toothed wheel 70 and subsequently it rigidly connects this second toothed wheel 70 to the intermediate shaft 60.

For example, the first connecting device 70s is operable only between said first position and said second position.

Preferably, in the second position the first connecting device does not act on other toothed wheels.

In the illustrated embodiment, the first connecting device 70s comprises a synchronizer operable between said first position and said second position.

The second gear can comprise a first toothed wheel 75 associated with the first driven shaft 55, preferably idly associated with said first driven shaft, and a second toothed wheel 80 associated with the intermediate shaft 60, preferably fitted to the intermediate shaft, and which meshes, for example directly, with said first toothed wheel 65.

For example, the second gear 75,80 of the first discontinuous speed gear is configured to achieve a lower transmission ratio than a transmission ratio that the first gear 65,70 of the first discontinuous speed gear is configured to achieve.

The first discontinuous speed gear also comprises a selector device configured to select the first gear 65,70 or the second gear 75,80 for the motion transmission between the first driven shaft 55 and the intermediate shaft 60.

In practice, the selector device is configured to selectively make either the first toothed wheel 65 of the first gear or the second toothed wheel 75 of the second gear rotatingly integral with the first driven shaft 55.

The selector device comprises a synchronizer 85 axially interposed between the first toothed wheel 65 of the first gear and the first toothed wheel 75 of the second gear and operable between a first position, in which it brings the first driven shaft 55 to the speed of the first toothed wheel 65 of the first gear and subsequently it rigidly connects said first toothed wheel 65 to the first driven shaft 55, and a second position, in which it brings the first driven shaft 55 to the speed of the first toothed wheel 75 of the second gear and subsequently it rigidly connects this first toothed wheel 75 to the first driven shaft 55. The synchronizer 85 of the selector device is preferably operable only between the first position and the second position.

However, it is not excluded that in an alternative embodiment the synchronizer 85 can provide for an intermediate position between the first and the second position, in which both the first toothed wheels 65,75 of the first gear and of the second gear of the first discontinuous speed gear are free to rotate idly with respect to the first driven shaft 55. The transmission assembly 10a, 10b comprises a second driving shaft 86, for example parallel and eccentric to the input shaft 15, preferably contained in the casing and rotatably associated therewith.

The transmission assembly 10a, 10b is also equipped with a second transmission apparatus that mechanically connects, preferably also directly, the input shaft 15 to the second driving shaft 86.

The second transmission apparatus is configured in such a way that the rotation speed of the second driving shaft 86 is different from the rotation speed of the input shaft 15. That is, the second transmission apparatus introduces a transmission ratio different from the unit between the second driving shaft 86 and the input shaft 15.

The second transmission apparatus can comprise a gear which mechanically connects the input shaft 15 to the second driving shaft 86.

In the illustrated embodiment, the second transmission apparatus comprises a discontinuous speed gear which mechanically connects the input shaft 15 to the second driving shaft 86 and is configured to make available at least two different selectable transmission ratios for the motion transmission between said shafts.

The discontinuous speed gear of the second transmission apparatus can comprise a group of gears selectively adapted to connect the second driving shaft 86 with the input shaft 15, i.e. it can comprise a first gear and a second gear, distinct from the first gear, each of which mechanically, and for example directly, connects the input shaft 15 to the second driving shaft 86.

Preferably, the first gear comprises a first toothed wheel 90 associated with the input shaft 15, preferably fitted to the input shaft, and a second toothed wheel 95 associated with the second driving shaft 86, preferably idly associated with said second driving shaft, and which meshes, for example directly, with said first toothed wheel 90.

The second gear can comprise a first toothed wheel 100 associated with the input shaft 15, preferably fitted to the input shaft, and a second toothed wheel 105 associated with the second driving shaft 86, preferably idly associated with said second driving shaft, and which meshes, for example directly, with said first toothed wheel 35.

For example, the second gear 100, 105 of the second transmission apparatus is configured to achieve a lower transmission ratio than a transmission ratio that the first gear 90,95 of the second transmission apparatus is configured to achieve. Furthermore, the transmission ratio of the first gear 25,30 of the first transmission apparatus is greater than the transmission ratio of the first gear 90,95 of the second transmission apparatus, which is greater than the transmission ratio of the second gear 35,40 of the first transmission apparatus, which in turn is greater than the transmission ratio of the second gear 100,105 of the second transmission apparatus.

The speed gear of the second transmission apparatus also comprises a selector device configured to select the first gear 90,95 or the second gear 100,105 for the motion transmission between the input shaft 15 and the second driving shaft 86.

In practice, the selector device is configured to selectively make either the second toothed wheel 95 of the first gear or the second toothed wheel 105 of the second gear rotatingly integral with the second driving shaft 86.

The selector device comprises a synchronizer 110 axially interposed between the second toothed wheel 95 of the first gear and the second toothed wheel 105 of the second gear and operable between a first position, in which it brings the second driving shaft 86 to the speed of the second toothed wheel 95 of the first gear and subsequently it rigidly connects this second toothed wheel 95 to the second driving shaft 86, and a second position, in which it brings the second driving shaft 86 to the speed of the second toothed wheel 105 of the second gear and subsequently it rigidly connects this second toothed wheel 105 to the second driving shaft 86.

The synchronizer 110 of the selector device is preferably operable only between the first position and the second position.

However, it is not excluded that in an alternative embodiment the synchronizer 110 may provide for an intermediate position between the first and the second position, in which both the second toothed wheels 95, 105 of the first gear and of the second gear of the discontinuous speed gear of the second transmission apparatus are free to rotate idly with respect to the second driving shaft 86.

The transmission assembly 10a, 10b comprises a second friction clutch 115, for example of the multi-disk type in oil bath, which is, preferably directly, interposed between the second driving shaft 86 and a second driven shaft 120, which is preferably coaxial to the second driving shaft 86.

The second friction clutch 115 comprises a first portion rigidly rotatingly integral with the second driving shaft 86, a second portion rigidly rotatingly integral with the second driven shaft 120 and an activating mechanism (not shown in the figures) configured to selectively couple and decouple rotatingly the first portion and the second portion.

Said activating mechanism is operatively connected to the electronic control unit 6.

The transmission assembly comprises a second discontinuous speed gear which mechanically connects the second driven shaft 120 to the intermediate shaft 60.

The second discontinuous speed gear is configured to make available at least two different selectable transmission ratios for the motion transmission between said shafts. The second discontinuous speed gear can comprise a group of gears selectively adapted to connect the second driven shaft 120 with the intermediate shaft 60, i.e. it can comprise a first gear and a second gear, distinct from the first gear, each of which mechanically connects, and for example directly, the second driven shaft 120 to the intermediate shaft 60.

Preferably, the first gear comprises a first toothed wheel 125 associated with the second driven shaft 120, preferably idly associated with said second driven shaft, and a second toothed wheel associated with the intermediate shaft 60, preferably rotatably associated with the intermediate shaft, which meshes with said first toothed wheel 65 and is rotatingly integral with the second toothed wheel 70 of the first gear of the first speed gear.

In the illustrated embodiment, the second toothed wheel of the first gear of the second speed gear and the second toothed wheel 70 of the first gear of the first speed gear are made in a single piece, i.e. the second toothed wheel of the first gear of the second speed gear coincides with the second toothed wheel 70 of the first gear of the first speed gear. The second gear can comprise a first toothed wheel 130 associated with the second driven shaft 120, preferably idly associated with said second driven shaft, and a second toothed wheel associated with the intermediate shaft 60, preferably fitted to the intermediate shaft, and which meshes, for example directly, with said first toothed wheel 130.

In the illustrated embodiment, the second toothed wheel of the second gear of the second speed gear and the second toothed wheel 80 of the second gear of the first speed gear are made in a single piece, i.e. the second toothed wheel of the second gear of the second speed gear coincides with the second toothed wheel 80 of the second gear of the first speed gear.

The second gear 130,80 of the second discontinuous speed gear is, for example, configured to achieve a lower transmission ratio than a transmission ratio that the first gear 125,70 of the second discontinuous speed gear is configured to achieve.

In particular, the first discontinuous speed gear and the second discontinuous speed gear are configured to achieve the same speed ratios, i.e. the first gear 125,70 of the second discontinuous speed gear and the first gear 65,70 of the first discontinuous speed gear achieve the same transmission ratio, and the second gear 130,80 of the second discontinuous speed gear and the second gear 75,80 of the first discontinuous speed gear achieve the same transmission ratio.

The second discontinuous speed gear comprises a selector device configured to select the first gear 125,70 or the second gear 130,80 for the motion transmission between the second driven shaft 120 and the intermediate shaft 60.

In practice, the selector device is configured to selectively make either the first toothed wheel 125 of the first gear or the second toothed wheel 130 of the second gear rotatingly integral with the second driven shaft 120.

The selector device comprises a synchronizer 135 axially interposed between the first toothed wheel 125 of the first gear and the first toothed wheel 130 of the second gear and operable between a first position, in which it brings the second driven shaft 120 to the speed of the first toothed wheel 125 of the first gear and subsequently it rigidly connects this first toothed wheel 125 to the second driven shaft 120, and a second position, in which it brings the second driven shaft 120 to the speed of the first toothed wheel 130 of the second gear and subsequently it rigidly connects this first toothed wheel 130 to the second driven shaft 120.

The synchronizer 135 of the selector device is preferably operable only between the first position and the second position.

However, it is not excluded that in an alternative embodiment the synchronizer 135 may provide for an intermediate position between the first and the second position, in which both the first toothed wheels 125, 130 of the first gear and of the second gear of the second discontinuous speed gear are free to rotate idly with respect to the second driven shaft 120.

The transmission assembly 10a, 10b comprises a gear reducer which mechanically connects the intermediate shaft 60 to an output shaft 140, which is mechanically connected to at least one drive wheel of the vehicle.

In the illustrated embodiment, the gear reducer achieves a transmission ratio (between the intermediate shaft 60 and the output shaft 140), the value of which is greater than 1, for example greater than 2, preferably greater than 2,5.

The gear reducer is equipped with a first toothed wheel 145 rotatingly integral with the intermediate shaft 60 and a second toothed wheel 150 rotatably idly associated with the output shaft 140 and which meshes, for example directly, with the first toothed wheel 145. The gear reducer 145,150 is for example distinct from the second gear 75,80 of the first speed gear and from the second gear 130,80 of the second speed gear.

The transmission assembly 10a, 10b comprises a second connecting device 150s associated with the second toothed wheel 150 of the gear reducer 145,150 and operable between a first position, in which it makes the output shaft 140 rotatingly integral with this second toothed wheel 150, and a second position, in which it allows a relative rotation between the second toothed wheel 150 and the output shaft 140, i.e. in this second position the second toothed wheel 150 is free to rotate idly with respect to the output shaft 140.

In particular, the second connecting device 150s in the first position brings the output shaft 140 to the speed of the second toothed wheel 150 and subsequently it rigidly connects this second toothed wheel 150 to the output shaft.

For example, the second connecting device 150s is operable only between said first position and said second position.

Preferably, in the second position the second connecting device does not act on other toothed wheels.

The second connecting device 150s can comprise a synchronizer or a coupling joint, operable between said first position and said second position.

In particular, the coupling joint is not configured to bring the output shaft 140 to the speed of the second toothed wheel 150 before making said output shaft 140 rotatingly integral with the second toothed wheel 150.

The coupling joint can comprise a first element rotatingly integral with the output shaft 140, a second element, which is rotatingly integral with the second toothed wheel 150 and is equipped with a housing seat, and a bolt element, which is slidably associated with the first element, is rotatingly dragged with respect to the output shaft 140 by the first element and is movable along a sliding axis between a first position, in which it is at least partially inserted in the housing seat and rigidly connects rotatingly the second toothed wheel 150 with the output shaft 140, and a second position, in which it is totally external with respect to the housing seat and allows a relative rotation between the second toothed wheel 150 and the output shaft 140 .

The transmission assembly 10a, 10b comprises a multiplier gear which mechanically connects the intermediate shaft 60 to the output shaft 140, and is distinct from the gear reducer 145,150.

For example, the multiplier gear achieves a lower transmission ratio (between the intermediate shaft 60 and the output shaft) than a transmission ratio achieved by the gear reducer.

In the illustrated embodiment, the value of the transmission ratio achieved by the multiplier gear is lower than 1, for example lower than 0.7.

The multiplier gear is equipped with a first toothed wheel, which is rotatably idly associated with the intermediate shaft 140 and is rotatingly integral with the second toothed wheel 70 (of the first gear of the first discontinuous speed gear). Consequently, the first connecting device 70s is adapted to selectively make the first toothed wheel of the multiplier gear integral with the intermediate shaft.

For example, the first toothed wheel of the multiplier gear is made in one piece with the second toothed wheel 70 of the first gear of the first discontinuous speed gear, i.e. the first toothed wheel of the multiplier gear coincides with the second toothed wheel 70 of the first gear of the first discontinuous speed gear.

In the illustrated embodiment, the first toothed wheel of the multiplier gear also corresponds to the second toothed wheel of the first gear of the second discontinuous speed gear.

The multiplier gear also comprises a second toothed wheel 155 rotatably idly associated with the output shaft 140 and which meshes, for example directly, with the first toothed wheel of the multiplier gear.

The transmission assembly 10a, 10b comprises a third connecting device 155s associated with the second toothed wheel 155 of the multiplier gear 70,155 and operable between a first position, in which it makes the output shaft 140 rotatingly integral with this second toothed wheel 155, and a second position, in which it allows a relative rotation between the second toothed wheel 155 and the output shaft 140, i.e. in this second position the second toothed wheel 155 is free to rotate idly with respect to the output shaft 140.

In particular, the third connecting device 155s in the first position brings the output shaft 140 to the speed of the second toothed wheel 155 and subsequently it rigidly connects this second toothed wheel 155 to the output shaft.

For example, the third connecting device 155s is operable only between said first position and said second position.

Preferably, in the second position the third connecting device does not act on other toothed wheels.

The third connecting device 155s can comprise a synchronizer or a coupling joint, operable between said first position and said second position.

In particular, the coupling joint is not configured to bring the output shaft 140 to the speed of the second toothed wheel 155 before making said output shaft 140 rotatingly integral with the second toothed wheel 155.

The coupling joint can comprise a first element rotatingly integral with the output shaft, a second element, which is rotatingly integral with the second toothed wheel 155 and is equipped with a housing seat, and a bolt element, which is slidably associated with the first element, is rotatingly dragged with respect to the output shaft 140 by the first element and is movable along a sliding axis between a first position, in which it is at least partially inserted in the housing seat and it rigidly rotatingly connects the second toothed wheel 155 with the output shaft 140, and a second position, in which it is totally external with respect to the housing seat and it allows a relative rotation between the second toothed wheel 155 and the output shaft 140.

The transmission assembly 10b can also comprise, as illustrated in the embodiment of figure 2, a third transmission apparatus, a third friction clutch and a third discontinuous speed gear in order to increase the number of available transmission ratios and to have, at any time and ready for use even under load, in addition to a selected transmission ratio, a transmission ratio higher than the one selected and a transmission ratio lower than the one selected.

In particular, the transmission assembly can comprise a third transmission apparatus which mechanically connects, for example also directly, the input shaft 15 to a third driving shaft 160, for example parallel and eccentric to the input shaft 15, preferably contained in the casing and rotatably associated therewith.

The third transmission apparatus is configured so that the rotation speed of the third driving shaft 160 is different from the rotation speed of the input shaft 15.

That is, the third transmission apparatus introduces a transmission ratio different from the unit between the third driving shaft 160 and the input shaft 15.

The third transmission apparatus can comprise a gear which mechanically connects the input shaft 15 to the third driving shaft 160.

In the illustrated embodiment, the third transmission apparatus comprises a discontinuous speed gear which mechanically connects the input shaft 15 to the third driving shaft 160 and is configured to make available at least two different transmission ratios selectable for motion transmission between said shafts.

The discontinuous speed gear of the third transmission apparatus can comprise a group of gears selectively adapted to connect the third driving shaft 160 with the input shaft 15, i.e. it can comprise a first gear and a second gear, distinct from the first gear, each of which mechanically, and for example directly, connects the input shaft 15 to the third driving shaft 160.

Preferably, the first gear comprises a first toothed wheel 165 associated with the input shaft 15, preferably fitted to the input shaft, and a second toothed wheel 170 associated with the third driving shaft 160, preferably idly associated with said third driving shaft, and which meshes, for example directly, with said first toothed wheel 165.

The second gear can comprise a first toothed wheel 175 associated with the input shaft 15, preferably fitted to the input shaft, and a second toothed wheel 180 associated with the third driving shaft 160, preferably idly associated with said second driving shaft, and which meshes, for example directly, with said first toothed wheel 175.

For example, the second gear 175,180 of the third transmission apparatus is configured to achieve a lower transmission ratio than a transmission ratio that the first gear 165,170 of the third transmission apparatus is configured to achieve.

Substantially the transmission apparatuses make available a plurality of selectable transmission ratios, for example six transmission ratios.

In particular, the respective values from the transmission ratio are ordered as follows from the largest to the smallest: transmission of the first gear 25,30 of the first transmission apparatus, transmission ratio of the first gear 90,95 of the second transmission apparatus, transmission ratio of the first gear 165,170 of the third transmission apparatus, transmission ratio of the second gear 35,40 of the first transmission apparatus, transmission ratio of the second gear 100,105 of the second transmission apparatus, transmission ratio of the second gear 175,180 of the third transmission apparatus.

The speed gear of the second transmission apparatus also comprises a selector device configured to select the first gear 165,170 or the second gear 175,180 for the motion transmission between the input shaft 15 and the third driving shaft 160.

In practice, the selector device is configured to selectively make either the second toothed wheel 170 of the first gear or the second toothed wheel 180 of the second gear rotatingly integral with the third driving shaft 160.

The selector device comprises a synchronizer 185 axially interposed between the second toothed wheel 170 of the first gear and the second toothed wheel 180 of the second gear and operable between a first position, in which it brings the third driving shaft 160 to the speed of the second toothed wheel 170 of the first gear and subsequently it rigidly connects this second toothed wheel 170 to the third driving shaft 160, and a second position, in which it brings the third driving shaft 165 to the speed of the second toothed wheel 180 of the second gear and subsequently it rigidly connects this second toothed wheel 180 to the third driving shaft 160.

The synchronizer 185 of the selector device is preferably operable only between the first position and the second position.

However, it is not excluded that in an alternative embodiment the synchronizer 185 may provide for an intermediate position between the first and the second position, in which both the second toothed wheels 170, 180 of the first gear and of the second gear of the discontinuous speed gear of the third transmission apparatus are free to rotate idly with respect to the third driving shaft 160.

The transmission assembly 10b can comprise a third friction clutch 190, for example of the multi-disc type in oil bath, which is, preferably directly, interposed between the third driving shaft 160 and a third driven shaft 195, which is preferably coaxial with the second driving shaft 86.

The third friction clutch 190 comprises a first portion rigidly rotatingly integral with the third driving shaft 160, a second portion rigidly rotatingly integral with the third driven shaft 195 and an activating mechanism (not shown in the figures) configured to selectively couple and decouple rotatingly the first portion and the second portion.

Said activating mechanism is operatively connected to the electronic control unit 6.

The transmission assembly 10 can comprise a third discontinuous speed gear which mechanically connects the third driven shaft 195 to the intermediate shaft 60.

The third discontinuous speed gear is configured to make available at least two different selectable transmission ratios for the motion transmission between said shafts.

The third discontinuous speed gear can comprise a group of gears selectively adapted to connect the third driven shaft 195 with the intermediate shaft 60, i.e. it can comprise a first gear and a second gear, distinct from the first gear, each of which mechanically connects, and for example directly, the third driven shaft 195 to the intermediate shaft 60. Preferably, the first gear of the third speed gear comprises a first toothed wheel 200 associated with the third driven shaft 195, preferably idly associated with said third driven shaft, and a second toothed wheel associated with the intermediate shaft 60, preferably rotatably associated with the intermediate shaft, which meshes, for example directly, with said first toothed wheel 200 and is rotatingly integral with the second toothed wheel 70 of the first gear of the first speed gear.

In the illustrated embodiment, the second toothed wheel of the first gear of the third speed gear and the second toothed wheel 70 of the first gear of the first speed gear are made in one piece, i.e. the second toothed wheel of the first gear of the third speed gear coincides with the second toothed wheel 70 of the first gear of the first speed gear.

The second gear can comprise a first toothed wheel 205 associated with the third driven shaft 195, preferably idly associated with said third driven shaft, and a second toothed wheel associated with the intermediate shaft 60, preferably fitted to the intermediate shaft, and which meshes, for example directly, with said first toothed wheel 205.

In the illustrated embodiment, the second toothed wheel of the second gear of the third speed gear and the second toothed wheel 80 of the second gear of the first speed gear are made in one piece, i.e. the second toothed wheel of the second gear of the third speed gear coincides with the second toothed wheel 80 of the second gear of the first speed gear.

The second gear 205,80 of the third discontinuous speed gear is, for example, configured to achieve a lower transmission ratio than a transmission ratio that the first gear 200,70 of the third discontinuous speed gear is configured to achieve.

In particular, the first discontinuous speed gear and the third discontinuous speed gear are configured to achieve the same speed ratios, i.e. the first gear 200,70 of the third discontinuous speed gear and the first gear 65,70 of the first discontinuous speed gear achieve the same transmission ratio, and the second gear 200,80 of the third discontinuous speed gear and the second gear 75,80 of the first discontinuous speed gear achieve the same transmission ratio.

The third discontinuous speed gear comprises a selector device configured to select the first gear 200,70 or the second gear 205,80 for the motion transmission between the third driven shaft 195 and the intermediate shaft 60.

In practice, the selector device is configured to selectively make either the first toothed wheel 200 of the first gear or the second toothed wheel 205 of the second gear rotatingly integral with the third driven shaft 195.

The selector device comprises a synchronizer 210 axially interposed between the first toothed wheel 200 of the first gear and the first toothed wheel 205 of the second gear and operable between a first position, in which it brings the third driven shaft 195 to the speed of the first toothed wheel 200 of the first gear and subsequently it rigidly connects this first toothed wheel 200 to the third driven shaft 195, and a second position, in which it brings the third driven shaft 195 to the speed of the first toothed wheel 205 of the second gear and subsequently it rigidly connects this first toothed wheel 205 to the third driven shaft 195.

The synchronizer 210 of the selector device is preferably operable only between the first position and the second position.

However, it is not excluded that in an alternative embodiment the synchronizer 210 may provide for an intermediate position between the first and the second position, in which both the first toothed wheels 200,205 of the first gear and of the second gear of the third discontinuous speed gear are free to rotate idly with respect to the third driven shaft 195. Each synchronizer described herein is a device of a type known to the person skilled in the art and therefore not further described.

The selector devices comprise actuating means of the respective synchronizer, said actuating means are neither described nor illustrated since they are of a type known to those skilled in the art.

In an alternative embodiment not illustrated, the selector devices may comprise, in place of the synchronizers, at least an electric motor configured to bring the corresponding shafts to the speed of the toothed wheels with which it is necessary to make them integral, and a coupling apparatus adapted to make said second toothed wheel rotatingly integral with the first driving shaft.

The transmission assembly 10 can be configured in such a way that the value of an overall transmission ratio between the output shaft 140 and the input shaft 15 when the torque, i.e. the rotary motion imparted by the output shaft 4 of the vehicle motor, is transmitted between said input shaft 15 and said output shaft 140 by means of the third transmission apparatus, i.e. the second gear 175,180 of the discontinuous speed gear of the third transmission apparatus, the second gear 205,80 of the third speed gear and the gear reducer 145,150 is comprised between 0.95 and 1.05 times the value of the overall transmission ratio between the output shaft 140 and the input shaft 15 when the torque is transmitted between said input shaft 15 and said output shaft 140 by means of the first transmission apparatus, i.e. the first gear 25,30 of the discontinuous speed gear of the first transmission apparatus, the first gear 65,70 of the first speed gear and the multiplier gear 70,155.

When the transmission assembly is thus configured, the second connecting device 150s and the third connecting device 155s each comprise a coupling joint, for example as described above.

It should be noted that "overall transmission ratio" means the ratio between the rotation speed (i.e. the angular speed, whose unit of measurement can be the number of revolutions made per unit of time) of the input shaft 15 with respect to the rotation speed of the output shaft 140.

The transmission assembly described herein can also comprise apparatuses for achieving at least one reverse gear (not shown). Such apparatuses can be, for example, reverse mechanisms interposed between the output shaft of the motor and the input shaft of the transmission assembly or reverse mechanisms interposed between the input shaft of the transmission assembly and the output shaft of the transmission assembly. It should be noted that a reverse mechanism generally comprises two shafts connected by a gear having an odd number of toothed wheels.

The operation of the transmission assembly 10a, 10b according to the invention is as follows.

At the start, the torque is transmitted from the input shaft 15 to the output shaft 140 through the first transmission apparatus, for example the first gear 25,30 of the discontinuous speed gear of the first transmission apparatus, the first gear 65,70 of the first discontinuous speed gear, and the gear reducer 145,150.

Under this condition, the first friction clutch 50 rotatingly connects the first driving shaft 20 and the first driven shaft 55, the second friction clutch 115 decouples the second driven shaft 120 from the second driving shaft 86, the selection device 85 of the first discontinuous speed gear makes the first toothed wheel 65 of the first gear rotatingly integral with the first driven shaft 55, the first connecting device 70s makes the second toothed wheel 70 of the first gear of the first discontinuous speed gear rotatingly integral with the intermediate shaft 60, the second connecting device 150s makes the second toothed wheel 150 of the gear reducer 145,150 rotatingly integral with the output shaft 140 and the third connecting device 155s leaves the second toothed wheel 155 of the multiplier gear 70,155 free to rotate idly with respect to the output shaft 140. Simultaneously, the selection device 135 of the second discontinuous speed gear prepares the next gear (i.e. a second overall transmission ratio) making the first toothed wheel 125 of the first gear 125,70 of the second discontinuous speed gear integral with the second driven shaft 120, while the second friction clutch 115 keeps the shafts between which it is interposed, decoupled.

When an increase in the vehicle's forward speed is required (to shift from the first to the second overall transmission ratio), the first friction clutch 50 is simply activated to decouple the first driving shaft 20 with respect to the first driven shaft 55 and simultaneously the second friction clutch 115 is activated. No other actuation is needed. If the vehicle speed increase continues, reaching the point where the torque must be transmitted through the multiplier gear 70,155, and no longer through the gear reducer 145,150, the first connecting device 70s is activated so as to make the second toothed wheel 70 free to rotate idly with respect to the intermediate shaft 60 and the third connecting device 155s makes the second toothed wheel 155 of the multiplier gear 70,155 integral with the output shaft 140.

With particular reference to the transmission assembly 10b illustrated in Figure 2, this transmission assembly makes available twenty-four overall transmission ratios, which can be engaged under load.

In this transmission assembly 10b the first six overall transmission ratios are achieved by modulating the first, second and third transmission apparatus (i.e. the selection devices 45,110,185 of the discontinuous speed gears of the respective transmission apparatuses), the first friction clutch, the second friction clutch, the third friction clutch, the whole by:
- keeping the respective selection devices 85,135,210 of the first, second and third discontinuous speed gear activated so that the torque is transmitted through the corresponding first gears 65,70;125,70;200,70,
- keeping the first connecting device 70s activated in the first position, in which it makes the intermediate shaft 60 rotatingly integral with the second toothed wheel 70,
- keeping the second connecting device 150s activated in the first position, in which it makes the output shaft 140 rotatingly integral with the second toothed wheel 150 and the torque is transmitted through the gear reducer 145,150, and
- keeping the third connecting device 155s activated in the second position, in which it leaves the second toothed wheel 155 of the multiplier gear 70,155 free to rotate idly with respect to the output shaft 140.

In particular, in the sixth overall transmission ratio, the torque is transmitted through: the second gear 175,180 of the third transmission apparatus, the first gear 200, 70 of the third discontinuous speed gear and the gear reducer 145, 150.

The shift between the sixth overall transmission ratio and the seventh overall transmission ratio takes place, after having previously activated the selection device 85 of the first discontinuous speed gear so that the first toothed wheel 75 of the second gear 75, 80 is rotatingly integral with the first driven shaft 55, activating the third friction clutch 190 so that it decouples the third driving shaft 160 and the third driven shaft 195 and by simultaneously activating: the first friction clutch 50, so that it makes the first driven shaft 55 rotatingly integral with the first driving shaft 20, and the first connecting device 70s in the second position, in which the second toothed wheel 70 is free to rotate idly with respect to the intermediate shaft 60.

The overall transmission ratios from seventh to twelfth one are achieved by modulating the first, second and third transmission apparatus, the first friction clutch 50, the second friction clutch 115, the third friction clutch 190, the whole by keeping:
- the respective selection devices 85, 135, 210 of the first, second and third discontinuous speed gear activated so that the torque is transmitted through the corresponding second gears 75, 80; 130, 80; 205, 80,
- the first connecting device 70s activated in the second position, in which it leaves the second toothed wheel 70 free to rotate idly with respect to the intermediate shaft 60,
- the second connecting device 150s activated in the first position, in which it makes the output shaft 140 rotatingly integral with the second toothed wheel 150, and
- the third connecting device 155s activated in the second position, in which it leaves the second toothed wheel 155 free to rotate idly with respect to the output shaft 140.

Since, during such switches (from the seventh to the twelfth overall transmission ratio), the first connecting device 70s in the second position, the second toothed wheel 70 does not transmit any motion to the respective first toothed wheels 65,125,200 of the corresponding first gears of the respective discontinuous speed gears, which therefore could for example become motionless.

By specifying, with respect to what has just been described, in the twelfth overall transmission ratio, the torque is transmitted through: the second gear 175,180 of the third transmission apparatus, the second gear 205,80 of the third discontinuous speed gear and the gear reducer 145,150.

The shift between the twelfth overall transmission ratio and the thirteenth overall transmission ratio takes place, after having previously activated the selection device 85 of the first discontinuous speed gear so that the first toothed wheel 65 of the first gear 65,70 is rotatingly integral with the first driven shaft 55, and after having activated the third connecting device 155s so that the second toothed wheel 155 of the multiplier gear 70,155 is made rotatingly integral with the output shaft 140, then the third friction clutch 190 is activated so that it decouples the third driving shaft 160 and the third driven shaft 195 and the first friction clutch 50 is simultaneously activated so that it makes the first driven shaft 55 rotatingly integral with the first driving shaft 20.

Subsequently, the second connecting device 150s is activated so that it decouples the second toothed wheel 150 of the gear reducer 145,150 from the output shaft 140.

The overall transmission ratios from the thirteenth to the eighteenth one are achieved by modulating the first, second and third transmission apparatus, the first friction clutch, the second friction clutch and the third friction clutch, the whole by keeping:
- the respective selection devices 85,135,210 of the first, second and third discontinuous speed gear activated so that the torque is transmitted through the corresponding first gears 65,70;125,70;200,70,
- the first connecting device 70s activated in the second position, in which it leaves the second toothed wheel 70 free to rotate idly with respect to the intermediate shaft 60,
- the second connecting device 150s activated in the second position, in which it leaves the second toothed wheel 150 free to rotate idly with respect to the output shaft 140, and
- the third connecting device 155s activated in the first position, in which it makes the output shaft 140 rotatingly integral with the second toothed wheel 155.

In the eighteenth overall transmission ratio, the torque is transmitted through: the second gear 175,180 of the third transmission apparatus, the second gear 205,80 of the third discontinuous speed gear and the multiplier gear 70,155.

The shift between the eighteenth and the nineteenth overall transmission ratios takes place with the following succession of activations: the selection device 85 of the first discontinuous speed gear is activated so that the first toothed wheel 75 of the second gear 75.80 is rotatingly integral with the second driven shaft 55 and the first connecting device 70 is activated in the first position, making the toothed wheel 70 rotatingly integral with the intermediate shaft 60, subsequently the third friction clutch 190 is activated so that it decouples the third driving shaft 160 and the third driven shaft 195 and simultaneously the first friction clutch 50 is activated so that it makes the first driven shaft 55 rotatingly integral with the first driving shaft 20.

The overall transmission ratios from the nineteenth to twenty-fourth one are achieved by modulating the first, second and third transmission apparatus, the first friction clutch 50, the second friction clutch 115, the third friction clutch 190, the whole by keeping:
- the respective selection devices 85,135,210 of the first, second and third discontinuous speed gear activated so that the torque is transmitted through the corresponding second gears 75,80;130,80;205,80,
- the first connecting device 70s activated in the first position, in which it makes the intermediate shaft 60 rotatingly integral with the second toothed wheel 70,
- the second connecting device 150s activated in the second position, in which it leaves the second toothed wheel 150 free to rotate idly with respect to the output shaft 140, and
- the third connecting device 155s activated in the first position, in which it makes the output shaft 140 rotatingly integral with the second toothed wheel 155.

As previously said, the transmission assembly 10b can be configured in such a way that the value of the overall transmission ratio between the output shaft 140 and the input shaft 15 when the torque, i.e. the rotary motion imparted by the output shaft 4 of the vehicle motor is transmitted between said input shaft 15 and said output shaft 140 by means of the third transmission apparatus, i.e. the second gear 175,180 of the discontinuous speed gear of the third transmission apparatus, the second gear 205,80 of the third speed gear and the gear reducer 145,150 is comprised between 0.95 and 1.05 times the value of the overall transmission ratio between the output shaft 140 and the input shaft 15 when the torque is transmitted between said input shaft 15 and said output shaft 140 by means of the first transmission apparatus, i.e. the first gear 25,30 of the discontinuous speed gear of the first transmission apparatus, the first gear 65,70 of the first speed gear and the multiplier gear 70,155.

This is equivalent to saying that the value of the twelfth overall transmission ratio is comprised between 0.95 and 1.05 times the value of the thirteenth overall transmission ratio.

When the transmission assembly 10b is thus configured, the second connecting device 150s and the third connecting device 155s each comprise a coupling joint and the shift between the twelfth overall transmission ratio and the thirteenth overall transmission ratio takes place with the following phases: after having previously activated the selection device 85 of the first discontinuous speed gear so that the first toothed wheel 65 of the first gear 65,70 is rotatingly integral with the second driven shaft 55, then the third friction clutch 190 is activated so that it decouples the third driving shaft 160 and the third driven shaft 195 and simultaneously the first friction clutch 50 is activated so that it makes the first driven shaft 55 rotatingly integral with the first driving shaft 20, subsequently the coupling joint of the third connecting device 155s is activated so that the second toothed wheel 155 of the multiplier gear 70,155 is made rotatingly integral with the output shaft 140 while the coupling joint of the second connecting device 150s keeps the second toothed wheel 150 of the gear reducer 145,150 rotatingly integral with the output shaft. This can happen because the configuration of the gears mentioned above which achieve the twelfth and the thirteenth overall transmission ratio allows having a condition in which, before the coupling joint of the third transmission apparatus 155s makes the second toothed wheel 155 integral with the output shaft, said second toothed wheel 155 and the output shaft rotate substantially at the same speed.

All this therefore, in this particular configuration, makes the use of synchronizers (as the ones known to those skilled in the art) to couple and decouple the second toothed wheels, respectively of the multiplier gear and the gear reducer, with/from the output shaft 140 unnecessary.

The invention thus conceived is susceptible to several modifications and variations, all falling within the scope of the inventive concept defined by the independent claim.

## Claims

1. Transmission assembly (10a, 10b) for motor vehicles, comprising:
- an input shaft (15) adapted to be connected to a motor (3) of the vehicle (1),
- an output shaft (140) adapted to be connected to a driving wheel (2) of the vehicle (1),
- a first transmission apparatus (25,30;35,40;45) which mechanically connects the input shaft (15) to a first driving shaft (20),
- a first friction clutch (50) interposed between the first driving shaft (20) and a first driven shaft (55),
- a first discontinuous speed gear (65,70;75,80;85), which connects the first driven shaft (55) to an intermediate shaft (60) and is provided with:
∘ a first gear (65, 70), which comprises a first toothed wheel (65) associated with the first driven shaft (55) and a second toothed wheel (70) rotatably idly associated with the intermediate shaft (60) which meshes with said first toothed wheel (65),
∘ a second gear (75,80), which comprises a first toothed wheel (75) associated with the first driven shaft (55) and a second toothed wheel (80) associated with the intermediate shaft (60), and
∘ a selector device (85) configured to select the first gear (65,70) or the second gear (75,80) of the first discontinuous speed gear, for motion transmission between the first driven shaft (55) and the intermediate shaft (60), and which is configured to selectively make either the first toothed wheel (65) of the first gear or the second toothed wheel (75) of the second gear rotatingly integral with the first driven shaft (55),
- a second transmission apparatus (90,95;100,105;110) which mechanically connects the input shaft (15) to a second driving shaft (86),
- a second friction clutch (115) interposed between the second driving shaft (86) and a second driven shaft (120),
- a second discontinuous speed gear (125,70;130,80;135) connecting the second driven shaft (120) to the intermediate shaft (60) and provided with:
∘ a first gear (125,70) comprising a first toothed wheel (125) associated with the second driven shaft (120) and a second toothed wheel (70) rotatably idly associated with the intermediate shaft (60) and rotatingly integral with the second toothed wheel (70) of the first gear (65,70) of the first discontinuous speed gear,
∘ a second gear (130,80) comprising a first toothed wheel (130) associated with the second driven shaft (120) and a second toothed wheel (80) associated with the intermediate shaft (60), and
∘ another selector device (135) configured to select the first gear (125,70) or the second gear (130,80) of the second discontinuous speed gear, for motion transmission between the second driven shaft (120) and the intermediate shaft (60), which is configured to selectively make either the first toothed wheel (125) of the first gear or the second toothed wheel (130) of the second gear rotatingly integral with the second driven shaft (120),
**characterized in**
- a gear reducer (145,150) provided with a first toothed wheel (145) rotatingly integral with the intermediate shaft (60) and a second toothed wheel (150) rotatably idly associated with the output shaft (140) and which meshes with the first toothed wheel (145),
- a multiplier gear (70,155) provided with a first toothed wheel (70), rotatably idly associated with the intermediate shaft (60) and rotatingly integral with the second toothed wheel (70) of the first gear (65,70) of the first discontinuous speed gear, and a second toothed wheel (155) rotatably idly associated with the output shaft (140) and which meshes with the first toothed wheel (70) of the multiplier gear,
- a first connecting device (70s) associated with the second toothed wheel (70) of the first gear (65,70) of the first discontinuous speed gear and operable between a first position, in which it makes the intermediate shaft (60) rotatingly integral with said second toothed wheel (70), and a second position, in which it allows a relative rotation between the second toothed wheel (70) and the intermediate shaft (60),
- a second connecting device (150s) associated to the gear reducer (145,150) and operable between a first position, in which it makes the second toothed wheel (150) of the gear reducer rotatingly integral with the output shaft (140), and a second position, in which it allows a relative rotation between said second toothed wheel (150) and the output shaft (140),
- a third connecting device (155s) associated to the multiplier gear (70,155) and operable between a first position, in which it makes the second toothed wheel (155) of the multiplier gear rotatingly integral with the output shaft (140), and a second position, in which it allows a relative rotation between said second toothed wheel (155) and the output shaft (140).

2. Transmission assembly (10a,10b) according to claim 1, wherein the primitive diameter of the second toothed wheel (70) of the first gear (65,70) of the first discontinuous speed gear is equal to the primitive diameter of the first toothed wheel (70) of the multiplier gear (70,155).

3. Transmission assembly (10b) according to claim 1, comprising:
- a third transmission apparatus (165,170;175,180;185) which mechanically connects the input shaft (15) to a third driving shaft (160),
- a third friction clutch (190) interposed between the third driving shaft (160) and a third driven shaft (195),
- a third discontinuous speed gear (200,70;205,80;210) connecting the third driven shaft (195) to the intermediate shaft (60) and provided with:
∘ a first gear (200,70), which comprises a first toothed wheel (200) associated with the third driven shaft (195) and a second toothed wheel (70) rotatably idly associated with the intermediate shaft (60) and integral with the second toothed wheel (70) of the first gear (65,70) of the first discontinuous speed gear,
∘ a second gear (205,80) comprising a first toothed wheel associated (205) with the third driven shaft (195) and a second toothed wheel (80) associated with the intermediate shaft (60), and
∘ a selector device (210) configured to select the first gear (200,70) or the second gear (205,80) of the first discontinuous speed gear, for the motion transm ission.

4. Transmission assembly (10b) according to claim 3, wherein the value of an overall transmission ratio between the output shaft (140) and the input shaft (15), when the torque is transmitted between said input shaft (15) and said output shaft (140) by means of the third transmission apparatus (165,170;175,180;185), the second gear (205,80) of the third discontinuous speed gear and the reduction gear (145,150), is of between 0,95 and 1,05 times the value of the total transmission ratio between the output shaft (140) and the input shaft (15) when the torque is transmitted between said input shaft (15) and said output shaft (140) by means of the first transmission apparatus (25,30; 35,40; 45), the first gear (65,70) of the first gearbox and the multiplier gear (70,155).

5. Transmission assembly (10a,10b) according to claim 1, wherein the second toothed wheel (70) of the first gear (65,70) of the first discontinuous speed gear coincides with the second toothed wheel (70) of the first gear (125,70) of the second discontinuous speed gear.

6. Transmission assembly (10a,10b) according to claim 1, wherein the second toothed wheel (80) of the second gear (75,80) of the first discontinuous speed gear coincides with the second toothed wheel (80) of the second gear (130,80) of the second discontinuous speed gear.

7. Motor vehicle 1 provided with a motor 3, a drive wheel 2 and a transmission unit (10a,10b) according to claim 1, for the transmission and modulation of the motion from the motor (3) to the driving wheel (2).

## Patentansprüche

1. Übertragungsanordnung (10a, 10b) für Kraftfahrzeuge, umfassend:
- eine Eingangswelle (15), die dazu geeignet ist, mit einem Motor (3) des Fahrzeugs (1) verbunden zu werden,
- eine Ausgangswelle (140), die dazu geeignet ist, mit einem Antriebsrad (2) des Fahrzeugs (1) verbunden zu werden,
- eine erste Übertragungseinrichtung (25,30;35,40;45), die die Eingangswelle (15) mit einer ersten Antriebswelle (20) mechanisch verbindet,
- eine erste Reibkupplung (50), die zwischen die erste Antriebswelle (20) und eine erste Abtriebswelle (55) eingeschoben ist,
- ein erstes diskontinuierliches Geschwindigkeitsgetriebe (65,70;75,80;85), das die erste Abtriebswelle (55) mit einer Zwischenwelle (60) verbindet und versehen ist mit:
∘ einem ersten Getriebe (65, 70), das ein erstes Zahnrad (65) umfasst, das mit der ersten Abtriebswelle (55) verbunden ist, und ein zweites Zahnrad (70), das lose drehbar mit der Zwischenwelle (60) verbunden ist, die in das erste Zahnrad (65) eingreift,
∘ einem zweiten Getriebe (75,80), das ein erstes Zahnrad (75) umfasst, das mit der ersten Abtriebswelle (55) verbunden ist, und ein zweites Zahnrad (80), das mit der Zwischenwelle (60) verbunden ist, und
∘ einer Wähleinrichtung (85), die ausgestaltet ist, um das erste Getriebe (65,70) oder das zweite Getriebe (75,80) des ersten diskontinuierlichen Geschwindigkeitsgetriebes zur Bewegungsübertragung zwischen der ersten Abtriebswelle (55) und der Zwischenwelle (60) zu wählen, und ausgestaltet ist, um entweder das erste Zahnrad (65) des ersten Getriebes oder das zweite Zahnrad (75) des zweiten Getriebes integral mit der ersten Abtriebswelle (55) drehbar zu machen,
- eine zweite Übertragungseinrichtung (90,95;100,105;110), die die Eingangswelle (15) mit einer zweiten Antriebswelle (86) mechanisch verbindet,
- eine zweite Reibkupplung (115), die zwischen die zweite Antriebswelle (86) und eine zweite Abtriebswelle (120) eingeschoben ist,
- ein zweites diskontinuierliches Geschwindigkeitsgetriebe (125,70;130,80;135), das die zweite Abtriebswelle (120) mit der Zwischenwelle (60) verbindet und versehen ist mit:
∘ einem ersten Getriebe (125,70), das ein erstes Zahnrad (125) umfasst, das mit der zweiten Abtriebswelle (120) verbunden ist, und ein zweites Zahnrad (70), das lose drehbar mit der Zwischenwelle (60) verbunden ist und integral mit dem zweiten Zahnrad (70) des ersten Getriebes (65,70) des ersten diskontinuierlichen Geschwindigkeitsgetriebes drehbar ist,
∘ einem zweiten Getriebe (130,80), umfassend ein erstes Zahnrad (130), das mit der zweiten Abtriebswelle (120) verbunden ist, und ein zweites Zahnrad (80), das mit der Zwischenwelle (60) verbunden ist, und
∘ einer weiteren Wähleinrichtung (135), die ausgestaltet ist, um das erste Getriebe (125,70) oder das zweite Getriebe (130,80) des zweiten diskontinuierlichen Geschwindigkeitsgetriebes zur Bewegungsübertragung zwischen der zweiten Abtriebswelle (120) und der Zwischenwelle (60) zu wählen, die ausgestaltet ist, um entweder das erste Zahnrad (125) des ersten Getriebes oder das zweite Zahnrad (130) des zweiten Getriebes integral mit der zweiten Abtriebswelle (120) drehbar zu machen,
**gekennzeichnet durch**
- ein Untersetzungsgetriebe (145,150), das mit einem ersten Zahnrad (145) versehen ist, das integral drehbar mit der Zwischenwelle (60) ist, und einem zweiten Zahnrad (150), das lose drehbar mit der Ausgangswelle (140) verbunden ist und in das erste Zahnrad (145) eingreift,
- ein Multiplikatorgetriebe (70,155), das mit einem ersten Zahnrad (70) versehen ist, das lose drehbar mit der Zwischenwelle (60) und integral drehbar mit dem zweiten Zahnrad (70) des ersten Getriebes (65,70) des ersten diskontinuierlichen Geschwindigkeitsgetriebes verbunden ist, und einem zweiten Zahnrad (155), das lose drehbar mit der Ausgangswelle (140) verbunden ist und in das erste Zahnrad (70) des Multiplikatorgetriebes eingreift,
- eine erste Verbindungseinrichtung (70s), die mit dem zweiten Zahnrad (70) des ersten Getriebes (65,70) des ersten diskontinuierlichen Geschwindigkeitsgetriebes verbunden ist und zwischen einer ersten Position, in der sie die Zwischenwelle (60) integral mit dem zweiten Zahnrad (70) drehen lässt, und einer zweiten Position betreibbar ist, in der sie eine relative Drehung zwischen dem zweiten Zahnrad (70) und der Zwischenwelle (60) erlaubt,
- eine zweite Verbindungseinrichtung (150s), die mit dem Untersetzungsgetriebe (145,150) verbunden ist und zwischen einer ersten Position, in der sie das zweite Zahnrad (150) des Untersetzungsgetriebes integral mit der Ausgangswelle (140) drehen lässt, und einer zweiten Position betreibbar ist, in der sie eine relative Drehung zwischen dem zweiten Zahnrad (150) und der Ausgangswelle (140) erlaubt,
- eine dritte Verbindungseinrichtung (155s), die mit dem Multiplikatorgetriebe (70,155) verbunden ist und zwischen einer ersten Position, in der sie das zweite Zahnrad (155) des Multiplikatorgetriebes integral mit der Ausgangswelle (140) drehen lässt, und einer zweiten Position betreibbar ist, in der sie eine relative Drehung zwischen dem zweiten Zahnrad (155) und der Ausgangswelle (140) erlaubt.

2. Übertragungsanordnung (10a,10b) nach Anspruch 1, wobei der ursprüngliche Durchmesser des zweiten Zahnrads (70) des ersten Getriebes (65,70) des ersten diskontinuierlichen Geschwindigkeitsgetriebes gleich dem ursprünglichen Durchmesser des ersten Zahnrads (70) des Multiplikatorgetriebes (70,155) ist.

3. Übertragungsanordnung (10b) nach Anspruch 1, umfassend:
- eine dritte Übertragungseinrichtung (165,170;175,180;185), die die Eingangswelle (15) mit einer dritten Antriebswelle (160) mechanisch verbindet,
- eine dritte Reibkupplung (190), die zwischen die dritte Antriebswelle (160) und eine dritte Abtriebswelle (195) eingeschoben ist,
- ein drittes diskontinuierliches Geschwindigkeitsgetriebe (200,70;205,80;210), das die dritte Abtriebswelle (195) mit der Zwischenwelle (60) verbindet und versehen ist mit:
∘ einem ersten Getriebe (200, 70), das ein erstes Zahnrad (200) umfasst, das mit der dritten Abtriebswelle (195) verbunden ist, und ein zweites Zahnrad (70), das lose drehbar mit der Zwischenwelle (60) verbunden und integral mit dem zweiten Zahnrad (70) des ersten Getriebes (65,70) des ersten diskontinuierlichen Geschwindigkeitsgetriebes ist,
∘ einem zweiten Getriebe (205,80), umfassend ein erstes Zahnrad (205), das mit der dritten Abtriebswelle (195) verbunden ist, und ein zweites Zahnrad (80), das mit der Zwischenwelle (60) verbunden ist, und
∘ einer Wähleinrichtung (210), die ausgestaltet ist, um das erste Getriebe (200,70) oder das zweite Getriebe (205,80) des ersten diskontinuierlichen Geschwindigkeitsgetriebes zur Bewegungsübertragung zu wählen.

4. Übertragungsanordnung (10b) nach Anspruch 3, wobei der Wert eines Gesamtübertragungsverhältnisses zwischen der Ausgangswelle (140) und der Eingangswelle (15), wenn das Drehmoment zwischen der Eingangswelle (15) und der Ausgangswelle (140) mittels der dritten Übertragungseinrichtung (165,170; 175,180; 185), des zweiten Getriebes (205,80) des dritten diskontinuierlichen Geschwindigkeitsgetriebes und des Untersetzungsgetriebes (145,150) übertragen wird, zwischen dem 0,95-fachen und 1,05-fachen des Wertes des Gesamtübertragungsverhältnisses zwischen der Ausgangswelle (140) und der Eingangswelle (15) beträgt, wenn das Drehmoment zwischen der Eingangswelle (15) und der Ausgangswelle (140) mittels der ersten Übertragungseinrichtung (25,30;35,40;45), des ersten Getriebes (65,70) des ersten Getriebegehäuses und des Multiplikatorgetriebes (70,155) übertragen wird.

5. Übertragungsanordnung (10a,10b) nach Anspruch 1, wobei das zweite Zahnrad (70) des ersten Getriebes (65,70) des ersten diskontinuierlichen Geschwindigkeitsgetriebes mit dem zweiten Zahnrad (70) des ersten Getriebes (125,70) des zweiten diskontinuierlichen Geschwindigkeitsgetriebes zusammenfällt.

6. Übertragungsanordnung (10a,10b) nach Anspruch 1, wobei das zweite Zahnrad (80) des zweiten Getriebes (75,80) des ersten diskontinuierlichen Geschwindigkeitsgetriebes mit dem zweiten Zahnrad (80) des zweiten Getriebes (130,80) des zweiten diskontinuierlichen Geschwindigkeitsgetriebes zusammenfällt.

7. Kraftfahrzeug 1, versehen mit einem Motor 3, einem Antriebsrad 2 und einer Übertragungseinheit (10a,10b) nach Anspruch 1 zur Übertragung und Modulation der Bewegung vom Motor (3) auf das Antriebsrad (2).

## Revendications

1. Dispositif de transmission (10a, 10b) pour véhicules à moteur comprenant :
- un arbre d'entrée (15) adapté pour être connecté à un moteur (3) du véhicule (1),
- un arbre de sortie (140) adapté pour être connecté à une roue motrice (2) du véhicule (1),
- un premier dispositif de transmission (25, 30, 35, 40, 45) qui raccorde de manière mécanique l'arbre d'entrée (15) à un premier arbre d'entraînement (20),
- un premier limiteur de couple à friction (50) interposé entre le premier arbre d'entraînement (20) et un premier arbre entraîné (55),
- une première boîte de vitesse discontinue (65, 70, 75, 80, 85), qui raccorde le premier arbre entraîné (55) à un arbre intermédiaire (60) et est pourvue de :
∘ une première vitesse (65, 70), qui comprend une première roue dentée (65) associée au premier arbre entraîné (55) et une deuxième roue dentée (70) associée de manière rotative et libre à l'arbre intermédiaire (60) qui engrène avec ladite première roue dentée (65),
∘ une deuxième vitesse (75, 80), qui comprend une première roue dentée (75) associée au premier arbre entraîné (55) et une deuxième roue dentée (80) associée à l'arbre intermédiaire (60), et
∘ un dispositif sélecteur (85) configuré pour sélectionner la première vitesse (65, 70) ou la deuxième vitesse (75, 80) de la première vitesse boîte de vitesse discontinue, pour la transmission de mouvement entre le premier arbre entraîné (55) et l'arbre intermédiaire (60), et qui est configuré pour rendre sélectivement la première roue dentée (65) de la première vitesse ou la deuxième roue dentée (75) de la deuxième vitesse solidaire en rotation du premier arbre entraîné (55),
- un deuxième dispositif de transmission (90, 95, 100, 105, 110) qui raccorde de manière mécanique l'arbre d'entrée (15) à un deuxième arbre d'entraînement (86),
- un deuxième limiteur de couple à friction (115) interposé entre le deuxième arbre d'entraînement (86) et un deuxième arbre entraîné (120),
- une deuxième boîte de vitesse discontinue (125, 70, 130, 80, 135), qui raccorde le deuxième arbre entraîné (120) à l'arbre intermédiaire (60) et est pourvue de :
∘ une première vitesse (125, 70) comprenant une première roue dentée (125) associée au deuxième arbre entraîné (120) et une deuxième roue dentée (70) associée de manière rotative et libre à l'arbre intermédiaire (60) et solidaire en rotation de la deuxième roue dentée (70) de la première vitesse (65, 70) de la première boîte de vitesse discontinue,
∘ une deuxième vitesse (130, 80) comprenant une première roue dentée (130) associée au deuxième arbre entraîné (120) et une deuxième roue dentée (80) associée à l'arbre intermédiaire (60), et
∘ un autre dispositif sélecteur (135) configuré pour sélectionner la première vitesse (125,70) ou la deuxième vitesse (130, 80) de la deuxième boîte de vitesse discontinue, pour la transmission de mouvement entre le deuxième arbre entraîné (120) et l'arbre intermédiaire (60), qui est configuré pour rendre sélectivement soit la première roue dentée (125) de la première vitesse ou de la deuxième roue dentée (130) de la deuxième vitesse solidaire en rotation du deuxième arbre entraîné (120) **caractérisé en ce que** :
- un réducteur (145, 150) pourvu d'une première roue dentée (145) solidaire en rotation de l'arbre intermédiaire (60) et d'une deuxième roue dentée (150) associée en rotation libre à l'arbre de sortie (140) et qui engrène avec la première roue dentée (145),
- un multiplicateur (70, 155) pourvu d'une première roue dentée (70), associée en rotation libre à l'arbre intermédiaire (60) et solidaire en rotation de la deuxième roue dentée (70) de la première vitesse (65, 70) de la première boîte de vitesse discontinue, et une deuxième roue dentée (155) associée en rotation libre à l'arbre de sortie (140) et qui engrène avec la première roue dentée (70) du multiplicateur,
- un premier dispositif de connexion (70s) associé à la deuxième roue dentée (70) de la première vitesse (65, 70) de la première boîte de vitesse discontinue et pouvant fonctionner entre une première position, dans laquelle il rend l'arbre intermédiaire (60) solidaire en rotation de ladite deuxième roue dentée (70), et une deuxième position, dans laquelle il permet une rotation relative entre la deuxième roue dentée (70) et l'arbre intermédiaire (60),
- un deuxième dispositif de connexion (150s) associé au réducteur (145, 150) et pouvant fonctionner entre une première position, dans laquelle il rend la deuxième roue dentée (150) du réducteur solidaire en rotation de l'arbre de sortie (140), et une deuxième position, dans laquelle il permet une rotation relative entre ladite deuxième roue dentée (150) et l'arbre de sortie (140),
- un troisième dispositif de connexion (155s) associé au multiplicateur (70, 155) et pouvant fonctionner entre une première position, dans laquelle il rend la deuxième roue dentée (155) du multiplicateur solidaire en rotation de l'arbre de sortie (140), et une deuxième position, dans laquelle il permet une rotation relative entre ladite deuxième roue dentée (150) et l'arbre de sortie (140).

2. Dispositif de transmission (10a, 10b) selon la revendication 1, dans lequel le premier diamètre de la deuxième roue dentée (70) de la première vitesse (65, 70) de la première boîte de vitesse discontinue est égal au premier diamètre de la première roue dentée (70) du multiplicateur (70, 155).

3. Dispositif de transmission (10b) selon la revendication 1 comprenant :
- un troisième dispositif de transmission (165, 170, 175, 180, 185) qui raccorde de manière mécanique l'arbre d'entrée (15) à un troisième arbre d'entraînement (160),
- un troisième limiteur de couple à friction (190) interposé entre le troisième arbre d'entraînement (160) et un troisième arbre entraîné (195),
- une troisième boîte de vitesse discontinue (200, 70, 205, 80, 210), qui raccorde le troisième arbre entraîné (195) à l'arbre intermédiaire (60) et est pourvue de :
∘ une première vitesse (200, 70) qui comprend une première roue dentée (200) associée au troisième arbre entraîné (195) et une deuxième roue dentée (70) associée de manière rotative et libre à l'arbre intermédiaire (60) et qui engrène avec la deuxième roue dentée (70) de la première vitesse (65, 70) de la première boîte de vitesse discontinue,
∘ une deuxième vitesse (205, 80), qui comprend une première roue dentée (205) associée au premier arbre entraîné (195) et une deuxième roue dentée (80) associée à l'arbre intermédiaire (60), et
∘ un dispositif sélecteur (210) configuré pour sélectionner la première vitesse (200, 70) ou la deuxième vitesse (205, 80) de la première boîte de vitesse discontinue, pour la transmission du mouvement.

4. Dispositif de transmission (10b) selon la revendication 3, dans lequel la valeur d'un rapport de transmission global entre l'arbre de sortie (140) et l'arbre d'entrée (15), lorsque le couple est transmis entre ledit arbre d'entrée (15) et ledit arbre de sortie (140) au moyen du troisième dispositif de transmission (165,170, 175,180 ; 185), de la deuxième vitesse (205, 80) de la troisième boîte de vitesse discontinue et du réducteur (145, 150), est compris entre 0,95 et 1,05 fois la valeur du rapport de transmission global entre l'arbre de sortie (140) et l'arbre d'entrée (15) lorsque le couple est transmis entre ledit arbre d'entrée (15) et ledit arbre de sortie (140) au moyen du premier dispositif de transmission (25, 30 ; 35, 40 ; 45), de la première vitesse (65, 70) de la première boîte de vitesses et du multiplicateur (70, 155).

5. Dispositif de transmission (10a, 10b) selon la revendication 1, dans lequel la deuxième roue dentée (70) de la première vitesse (65, 70) de la première boîte de vitesse discontinue coïncide avec la deuxième roue dentée (70) de la première vitesse (125, 70) de la deuxième boîte de vitesse discontinue.

6. Dispositif de transmission (10a, 10b) selon la revendication 1, dans lequel la deuxième roue dentée (80) de la deuxième vitesse (75, 80) de la première boîte de vitesse discontinue coïncide avec la deuxième roue dentée (80) de la deuxième vitesse (130, 80) de la deuxième boîte de vitesse discontinue.

7. Véhicule à moteur 1 muni d'un moteur 3, d'une roue motrice 2 et d'une unité de transmission (10a, 10b) selon la revendication 1, pour la transmission et la modulation du mouvement du moteur (3) à la roue motrice (2).
